# EUROPEAN PATENT APPLICATION

(11) **EP 4 800 563 A1**
(43) Date of publication of application: **02.09.2026**
(21) Application number: 24882822.0
(22) Date of filing: 23.10.2024
(51) Int. Cl.: G06F 13/38

(54) **DATA PROCESSING DEVICE AND DATA DRIVING DEVICE**

(30) Priority: 24.10.2023 KR 20230143319
(71) Applicant: LX Semicon Co., Ltd., Daejeon 34027 (KR)
(72) Inventor: KIM, Do Seok, Daejeon 34027 (KR); KIM, Hoon Lee, Daejeon 34027 (KR); KIM, Myung Yu, Daejeon 34027 (KR)
(74) Representative: Ter Meer Steinmeister & Partner
(86) International application number: PCT/KR2024/016201
(87) International publication number: WO 2025/089795

(57) **Abstract**

Disclosed is a data processing device which includes a first data conversion unit configured to convert image data and control data, and a transmission unit configured to transmit the converted image data and control data, wherein the first data conversion unit includes a first packer that converts the image data into a first data packet, a second packer that converts the control data into a second data packet, a first encoder that encodes the first data packet according to a first rule, and a second encoder that encodes the second data packet according to a second rule different from the first rule.

## Description

### CROSS-REFERENCE TO RELATED APPLICATION

This application claims priority to and the benefit of Korean Patent Applications No. 10-2023-0143319, filed on October 24, 2023 and No. 10-2024-0145901, filed October 23, 2024, the disclosure of which is incorporated herein by reference in its entirety.

### BACKGROUND

### 1. Field of the Invention

Embodiments of the present invention relate to a technique for driving a display device.

### 2. Discussion of Related Art

A display panel is composed of a plurality of pixels arranged in the form of a matrix. Each pixel may have a color such as red (R), green (G), blue (B), etc., and displays an image on a display panel by emitting light in grayscale according to image data.

Image data is transmitted from a data processing device such as a timing controller to a data driving device such as a source driver. Image data is transmitted as digital values, and a data driving device converts the image data into an analog voltage to drive each pixel.

Since image data indicates grayscale values of respective pixels individually or independently, the amount of image data increases as the number of pixels arranged on a display panel increases. In addition, as a frame rate increases, the amount of image data that should be transmitted per unit time increases.

Recently, as display panel resolution has become higher, the number of pixels arranged on a display panel and a frame rate have both been increasing, and in order to process the increased amount of image data due to the higher resolution, data communication in a display device has become faster.

### SUMMARY OF THE INVENTION

The present invention is directed to providing a data processing device and a data driving device that are capable of encoding and decoding setting data, control data, and image data each in a different manner.

The present invention is also directed to providing a data processing device and a data driving device that are capable of encoding image data to have a constant maximum run length.

The present invention is also directed to providing a data processing device and a data driving device that are capable of encoding control data to ensure transmission signal quality.

Objects of the present invention are not limited to the above-described objects, and other objects that are not described will be clearly understood by those skilled in the art from the following descriptions.

According to an aspect of the present invention, there is provided a data processing device including a first data conversion unit configured to convert image data and control data, and a transmission unit configured to transmit the converted image data and control data, wherein the first data conversion unit includes a first packer that converts the image data into a plurality of first data packets, a second packer that converts the control data into a second data packet, a first encoder that encodes the plurality of first data packets according to a first rule, and a second encoder that encodes the second data packet according to a second rule different from the first rule.

The number of bits of the second data packet may be smaller than the number of bits of the first data packet.

The number of bits of the encoded second data packet may be the same as the number of bits of the encoded first data packet.

The control data may include first control data and second control data, the first control data may include control values applied to a display panel in units of lines or in units of pixels, and the second control data may include control values applied in units of frames.

The data driving device may divide each frame time into an active section and a blank section, transmit the image data and the first control data in the active section, and transmit the second control data in the blank section.

The data processing device of claim may further include a second data conversion unit including a third packer that converts setting data into a third data packet, and a third encoder that encodes the third data packet according to a third rule different from the first and second rules.

The transmission unit may transmit the converted image data, control data, and setting data in a predetermined order.

The first encoder may include a data comparison unit that compares a most significant bit (MSB) of a 1-1 data packet and a least significant bit (LSB) of a 1-2 data packet adjacent to the 1-1 data packet among the plurality of first data packets, a code conversion unit that inverts the LSB of the 1-2 data packet when the MSB of the 1-1 data packet and the LSB of the 1-2 data packet have the same value, and a bit generation unit that generates an indicator packet in which conversion information of the LSB of the 1-2 data packet is stored.

The data processing device of claim may further include a data group generation unit configured to insert the indicator packet into the plurality of first data packets to generate a plurality of data groups.

Each of the plurality of data groups may have the same number of packets, and the number of bits of the indicator packet may be the same as the number of data packets in the data group.

The second encoder may map each of unit bits constituting the control data to a plurality of redundancy bits having the same value as the unit bit and a transition bit having a different value from the unit bit.

According to another aspect of the present invention, there is provided a data driving device including a receiving circuit configured to receive a first data packet, a second data packet, and a third data packet, a third data conversion unit configured to convert the first data packet and the second data packet, and a fourth data conversion unit configured to convert the third data packet, wherein the third data conversion unit includes a first decoder that decodes the first data packet according to a first rule, a second decoder that decodes the second data packet according to a second rule different from the first rule, a first unpacker that converts the first data packet into image data, and a second unpacker that converts the second data packet into control data, and the fourth data conversion unit includes a third decoder that decodes the third data packet according to a third rule different from the first and second rules, and a third unpacker that converts the third data packet into setting data.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a configuration diagram of a display device according to one embodiment of the present invention;
FIG. 2 is a diagram illustrating main communication and auxiliary communication between a data processing device and a data driving device according to one embodiment of the present invention;
FIG. 3 is a configuration diagram of a data processing device and a data driving device according to one embodiment of the present invention;
FIG. 4 is a configuration diagram of a scrambler according to one embodiment of the present invention;
FIG. 5 is a configuration diagram of a first encoder according to one embodiment of the present invention;
FIG. 6 is a configuration diagram of a second encoder according to one embodiment of the present invention;
FIG. 7 is a configuration diagram of a data processing device according to another embodiment of the present invention;
FIG. 8 is a diagram illustrating a sequence of transmission signals according to one embodiment of the present invention;
FIG. 9 is a configuration diagram of blank data and line data according to one embodiment of the present invention;
FIG. 10 is a diagram illustrating bits of a plurality of packets according to one embodiment of the present invention;
FIG. 11 is a configuration diagram of a data packet of a first horizontal line according to one embodiment of the present invention;
FIG. 12 is a diagram illustrating a data packet including dummy data according to one embodiment of the present invention;
FIG. 13 is a diagram illustrating a structure of image data according to one embodiment of the present invention;
FIG. 14 is a flowchart illustrating an operation of encoding image data according to one embodiment of the present invention;
FIG. 15 is a diagram illustrating a method of encoding image data according to one embodiment of the present invention;
FIG. 16 is a diagram illustrating a decoding process according to one embodiment of the present invention;
FIG. 17 is a diagram illustrating a process of encoding control data according to one embodiment of the present invention; and
FIG. 18 is a diagram illustrating a process of encoding control data according to another embodiment of the present invention.

### DETAILED DESCRIPTION OF EXEMPLARY EMBODIMENTS

Advantages and features of the present invention and methods of achieving the same will be clearly understood with reference to the accompanying drawings and embodiments described in detail below. However, the present invention is not limited to the embodiments to be disclosed below but may be implemented in various different forms. The embodiments are provided in order to fully explain the present embodiments and fully explain the scope of the present invention for those skilled in the art. The scope of the present invention is only defined by the appended claims.

The shapes, sizes, ratios, angles, numbers, etc., disclosed in the drawings for describing the embodiments of the present invention are exemplary, and thus, the present invention is not limited to the matters illustrated in the drawings. Throughout the specification, the same reference numerals refer to substantially the same components. Further, in descriptions of the present invention, when detailed descriptions of related known technology are deemed to unnecessarily obscure the gist of the present invention, they will be omitted.

The following embodiments may be partially or entirely coupled or combined with each other and may be technically linked and operated in various ways. The respective embodiments may be implemented independently of each other or implemented together in a related relationship.

Hereinafter, various embodiments of the present invention will be described in detail with reference to the accompanying drawings.

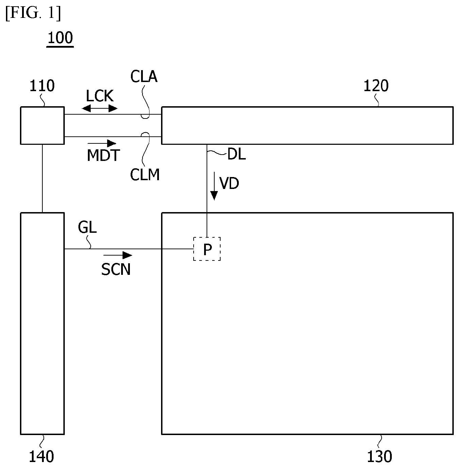

FIG. 1 is a configuration diagram of a display device according to one embodiment.

Referring to FIG. 1, a display device 100 may include a data processing device 110, a data driving device 120, a display panel 130, and a gate driving device 140.

The data processing device 110 may receive image data from the other device, which is a device that generates image data and may be a host.

The data processing device 110 may process the image data received from the other device to be suitable for the data driving device 120 and transmit the processed image data to the data driving device 120. The data processing device 110 may digitally gamma-correct a grayscale value of each pixel included in the image data and may compensate the grayscale value of each pixel to match the characteristics of each pixel.

The data driving device 120 may receive the image data from the data processing device 110, generate a data voltage VD according to the grayscale values of the pixels included in the image data, and supply the data voltage VD to pixels P.

A plurality of pixels P may be arranged on the display panel 130. In addition, each pixel P may be connected to the data driving device 120 through a data line DL and connected to the gate driving device 140 through a gate line GL.

The display panel 130 may be a panel of a flat panel display device such as a liquid-crystal display (LCD), a field-emission display (FED), a plasma display panel (PDP), an organic light-emitting display (OLED), an inorganic light-emitting display, etc.

A transistor may be disposed in each pixel P, a gate terminal of the transistor may be connected to a gate line GL, and a source terminal of the transistor may be connected to a data line DL. When the gate driving device 140 supplies a scan signal SCN to the gate line GL, the transistor is turned on and the data line DL is connected to the pixel P. After the data line DL is connected to the pixel P, the data voltage VD supplied by the data driving device 120 is transmitted to the pixel P.

In order to match the timing of the gate driving device 140 and the data driving device 120, the data processing device 110 may transmit a timing control signal to the gate driving device 140 and the data driving device 120.

The data processing device 110 may transmit a gate control signal to the gate driving device 140. The gate control signal may include the above-described timing control signal. The gate driving device 140 may generate a scan signal SCN according to the gate control signal and supply the scan signal SCN to the pixel P through the gate line GL.

At least two types of communication lines CLM and CLA may be disposed between the data processing device 110 and the data driving device 120. The data processing device 110 may transmit a first communication signal MDT through a first communication line CLM and transmit or receive a second communication signal LCK through a second communication line CLA.

Hereinafter, for convenience of description, the first communication line CLM may be defined as a main communication line, and the second communication line CLA may be defined as an auxiliary communication line. In addition, the first communication signal MDT may be defined as a main communication signal, and the second communication signal LCK may be defined as an auxiliary communication signal.

The data processing device 110 may transmit the image data and the timing control signal to the data driving device 120 through a main communication signal MDT, and the data driving device 120 may transmit status information to the data processing device 110 through the auxiliary communication signal LCK.

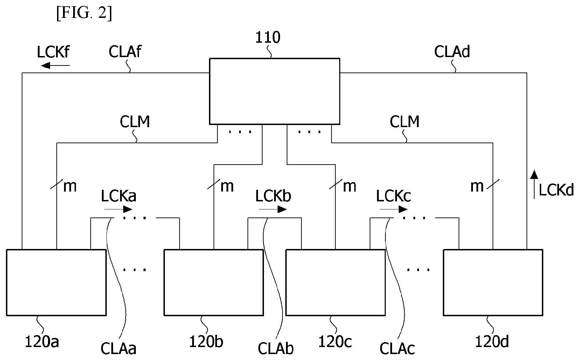

FIG. 2 is a diagram illustrating main communication and auxiliary communication between the data processing device and the data driving device according to one embodiment.

Referring to FIG. 2, the data driving device 120 may be composed of a plurality of data driving integrated circuits 120a, 120b, 120c, and 120d.

The data processing device 110 may communicate with the plurality of data driving integrated circuits 120a, 120b, 120c, and 120d through main communication lines CLM. The data processing device 110 may be connected to each of the data driving integrated circuits 120a, 120b, 120c, and 120d in one-to-one correspondence. For example, the data processing device 110 may be connected to a first data driving integrated circuit 120a in one-to-one correspondence and to a second data driving integrated circuit 120b in one-to-one correspondence.

Each main communication line CLM may include m lines that are electrically insulated (m is a natural number). In addition, every two of the m lines may be paired, and each pair may be configured to enable low voltage differential signaling (LVDS) communication.

Such a communication connection structure and the main communication signal (see MDT in FIG. 1) transmitted or received between the data processing device 110 and the plurality of data driving integrated circuits 120a, 120b, 120c, and 120d may be defined as main communication.

The data processing device 110 and the plurality of data driving integrated circuits 120a, 120b, 120c, and 120d may transmit or receive information through auxiliary communication other than the main communication.

Auxiliary communication between the plurality of data driving integrated circuits 120a, 120b, 120c, and 120d may be performed in the form of a cascade. For example, a first data driving integrated circuit 120a disposed at a beginning portion of the cascade may transmit a first auxiliary communication signal LCKa to a second data driving integrated circuit 120b through a first auxiliary communication line CLAa.

The second data driving integrated circuit 120b may generate a second auxiliary communication signal LCKb by combining an internally generated status signal and the first auxiliary communication signal LCKa and transmit the generated second auxiliary communication signal LCKb to a third data driving integrated circuit 120c through a second auxiliary communication line CLAb.

The third data driving integrated circuit 120c may generate a third auxiliary communication signal LCKc by combining an internally generated status signal and the second auxiliary communication signal LCKb and transmit the generated third auxiliary communication signal LCKc to a fourth data driving integrated circuit 120d through a third auxiliary communication line CLAc.

The fourth data driving integrated circuit 120d disposed at an end portion of the cascade may generate a fourth auxiliary communication signal LCKd by combining an internally generated status signal and the third auxiliary communication signal LCKc and transmit the generated fourth auxiliary communication signal LCKd to the data processing device 110 through a fourth auxiliary communication line CLAd. Here, the fourth data driving integrated circuit 120d disposed at the end portion of the cascade transmits the auxiliary communication signal to the data processing device 110 through auxiliary communication.

The data processing device 110 may check the status of the data driving integrated circuits 120a, 120b, 120c, and 120d on the basis of the auxiliary communication signal received from the fourth data driving integrated circuit 120d disposed at the end portion of the cascade.

The data processing device 110 may transmit an auxiliary communication feedback signal with respect to the auxiliary communication signal to the first data driving integrated circuit 120a disposed at the beginning portion of the cascade through an auxiliary communication feedback line CLAF. For example, the data processing device 110 may generate an auxiliary communication feedback signal in the same form as the auxiliary communication signal received from the fourth data driving integrated circuit 120d and transmit the generated auxiliary communication feedback signal to the first data driving integrated circuit 120a. However, the embodiments of the present invention are not limited thereto. For example, the auxiliary communication feedback line CLAF may be omitted, and a driving voltage VCC and a pull-up resistor may be connected to a reception unit of the first data driving integrated circuit 120a. For example, the plurality of data driving integrated circuits 120a, 120b, 120c, and 120d may be connected to the data processing device 110 in a multi-drop manner.

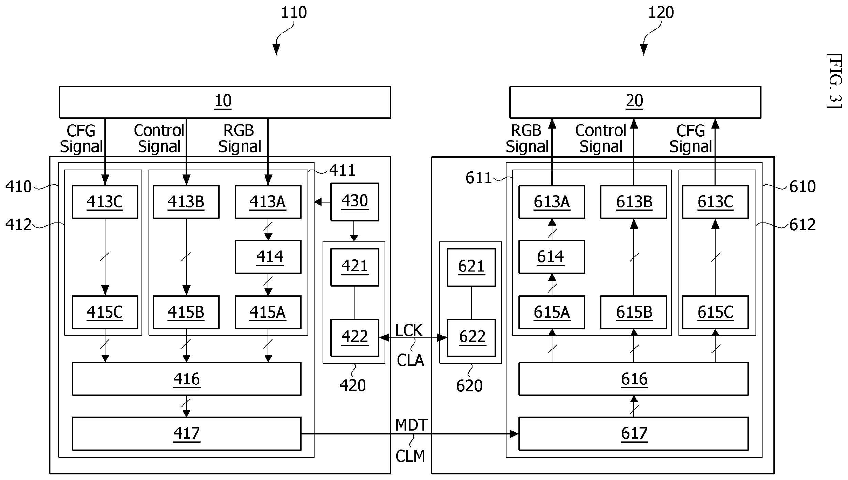

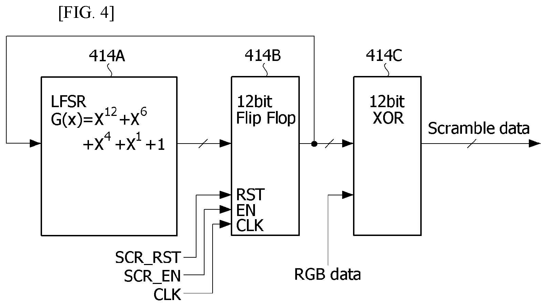

FIG. 3 is a configuration diagram of the data processing device and the data driving device according to one embodiment. FIG. 4 is a configuration diagram of a scrambler according to one embodiment of the present invention.

Referring to FIG. 3, the data processing device 110 may include a first main communication circuit 410 and a first auxiliary communication circuit 420, and the data driving device 120 may include a second main communication circuit 610 and a second auxiliary communication circuit 620. The first main communication circuit 410 may communicate with the second main communication circuit 610, and the first auxiliary communication circuit 420 may communicate with the second auxiliary communication circuit 620.

The first main communication circuit 410 may transmit a main communication signal MDT to the data driving device 120 through a main communication line CLM. The first main communication circuit 410 may transmit image data and first control data in an active section through the main communication line CLM and transmit second control data in a blank section.

The data driving device 120 may drive pixels of a display panel according to the image data. The first control data may include control values applied to a display panel in units of lines or in units of pixels, and the second control data may include control values applied in a longer cycle than line units or pixel units or control values applied in units of frames.

The first main communication circuit 410 may transmit setting data at a first data rate through the main communication line CLM. Thereafter, the first main communication circuit 410 may transmit the image data, the first control data, and the second control data at a second data rate higher than the first data rate through the main communication line CLM. A mode in which communication is performed at the first data rate may be defined as a low-speed communication mode, and a mode in which communication is performed at the second data rate may be defined as a high-speed communication mode.

The first main communication circuit 410 may receive the image data, the control data, and the setting data, and convert and output the received image data, control data, and setting data according to different rules. The first main communication circuit 410 may include a first data conversion unit 411 that converts the image data and the control data and a second data conversion unit 412 that converts the setting data. The first data conversion unit 411 and the second data conversion unit 412 may be defined as a first data conversion circuit and a second data conversion circuit, respectively.

The first data conversion unit 411 may receive the image data and the control data and convert and output the received image data and control data according to different rules. The first data conversion unit 411 may include a first packer 413A, a second packer 413B, a scrambler 414, a first encoder 415A, and a second encoder 415B.

The first packer 413A may receive the image data from a data processing circuit 10. The data processing circuit 10 may be an external host or an application processor (AP), but the embodiments of the present invention are not limited thereto. For example, the data processing circuit 10 may be a portion of the data processing device 110 that receives data from a host.

The first packer 413A and the second packer 413B may each be connected to the data processing circuit 10 through a separate line and may independently receive data. The data processing circuit 10 may transmit data to the first packer 413A and/or the second packer 413B according to a predetermined time line. However, the embodiments of the present invention are not limited thereto. The first packer 413A and the second packer 413B may be connected to the data processing circuit 10 through a single line and may receive data according to a predetermined time line.

The first packer 413A may receive image data in a serial bit stream format from the data processing circuit 10 to generate an image packet having a preset number of bits, and the second packer 413B may receive the first control data and/or the second control data from the data processing circuit 10 to generate a control packet having a preset number of bits. The image packet may be referred to as a first data packet, an image data packet, image packet data, etc., and the control packet may be referred to as a second data packet, a control data packet, control packet data, etc.

The number of bits of the image packet packaged by the first packer 413A may be different from the number of bits of the control packet packaged by the second packer 413B. For example, one image packet may be packaged with 12 bits, while one control packet may be packaged with 3 or 4 bits. However, the embodiments of the present invention are not limited thereto. For example, the image packet and the control packet may be packaged with the same number of bits.

The scrambler 414 may scramble data of the image packet. Scrambling is a process of mixing bits of transmitted data and may prevent the same bit from being placed consecutively K times or more (K is a natural number greater than or equal to 2) in a transmission stream of the data. Scrambling is performed according to pre-agreed rules, and the data driving device 120 may restore the stream in which respective bits are mixed back to the original data according to the pre-agreed rules.

Referring to FIG. 4, the scrambler 414 may include a 12-bit linear feedback shift register (LFSR) configured as a polynomial expression, i.e., G(x)=X¹²+X⁶+X⁴+X¹+1, a logic circuit 414B, and an arithmetic circuit 414C. After power is turned on, an initial seed value of the LFSR 414A may be 12'hFFF, and the LFSR of the scrambler 414 and a descrambler 614 may be initialized with a seed value by a control signal SCR_RST. Thereafter, when a control signal SCR_EN is input to the logic circuit 414B as "H," the LFSR 414A may be processed, and the value of the LFSR 414A and the image data may be subjected to an exclusive OR (XOR) operation by the arithmetic circuit 414C to output scrambled data. The control signals such as SCR_RST and SCR_EN may be set in the control data of a display mode.

The scrambler 414 may scramble only the image data and may not perform scrambling on the first control data or the second control data. However, the embodiments of the present invention are not limited thereto. For example, the scrambler 414 may scramble blank data to reduce electromagnetic interference (EMI) more effectively.

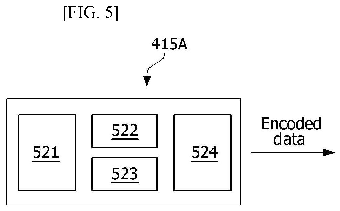

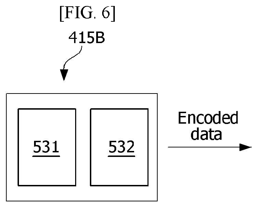

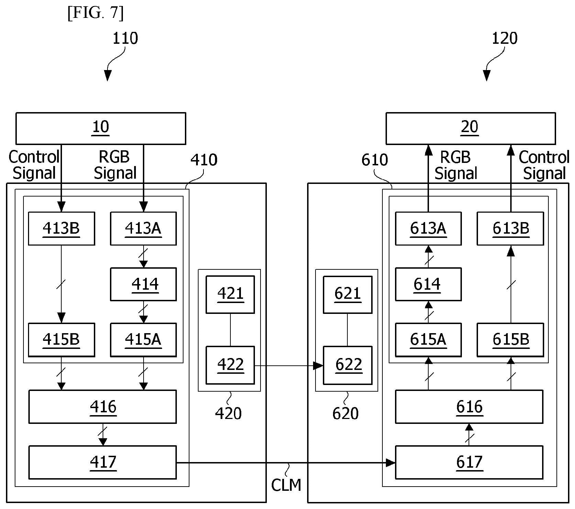

FIG. 5 is a configuration diagram of the first encoder according to one embodiment of the present invention. FIG. 6 is a configuration diagram of the second encoder according to one embodiment of the present invention. FIG. 7 is a configuration diagram of a data processing device according to another embodiment of the present invention.

Referring to FIG. 5, the first encoder 415A may include a data comparison unit 521, a bit generation unit 522, a code conversion unit 523, and a data group generation unit 524.

The data comparison unit 521 may compare a most significant bit (MSB) of a first image packet with a least significant bit (LSB) of a second image packet adjacent to the first image packet. The first image packet may be a previous image data packet transmitted to the first encoder 415A immediately before, and the second image packet may be a current image data packet, but the embodiments of the present invention are not limited thereto. For example, the data comparison unit 521 may simultaneously receive a plurality of image data packets stored in a frame memory as inputs and compare bits at boundaries of the packets. The first image packet may be referred to as a 1-1 data packet and the second image packet may be referred to as a 1-2 data packet.

The data comparison unit 521 may output an inverted signal when the MSB of the first image packet and the LSB of the second image packet adjacent to the first image packet are the same and output a non-inverted signal when the MSB of the first image packet and the LSB of the second image packet are different. The bits being the same may mean that the bits have the same value, 0 or 1. Further, the bits being different may mean that the bits have different values, 0 and 1.

The data comparison unit 521 may perform an XOR operation. The data comparison unit 521 may output an inverted signal, i.e., 0, when both the MSB of the first image packet and the LSB of the second image packet are 0 or 1.

The data comparison unit 521 may output a non-inverted signal, i.e., 1, when the MSB of the first image packet is 1 and the LSB of the second image packet is 0 or when the MSB of the first image packet is 0 and the LSB of the second image packet is 1.

The bit generation unit 522 may generate an indicator packet and receive the inverted signal or non-inverted signal output from the data comparison unit 521 to map conversion information about the corresponding bit to the indicator packet. The conversion information may be the inverted signal or non-inverted signal output from the data comparison unit 521. For example, when the conversion information is input as 1, a decoder may not invert the corresponding bit, and when the conversion information is input as 0, the decoder may invert the corresponding bit.

The code conversion unit 523 may invert or not invert an LSB of an image packet according to the inverted signal or the non-inverted signal. However, the embodiments of the present invention are not limited thereto. For example, the MSB of the first image packet may be compared with the LSB of the second image packet, and when the bits are the same, the MSB of the first image packet may be inverted. According to the embodiment, two adjacent image packets may be compared with each other, and when adjacent bits at a boundary between the packets have the same value, one of the adjacent bits may be inverted to generate a clock edge.

According to the embodiment, an LSB of an image packet may have a different value from an MSB of an image packet adjacent to the image packet. Since bits at a boundary between the packets have different values, a clock edge may be generated at the boundary between the packets. Therefore, a set maximum run length may be secured.

For example, in the case in which the set maximum run length is 3UI, when the bits of the first image packet are [0100] and the bits of the second image packet are [0000], 0 is consecutive 6 times in the two image packets, and thus the maximum run length may exceed 3UI. However, according to the embodiment, since the LSB of the second image packet is inverted from 0 to 1, the bits of the second image packet may be encoded as [1000]. Therefore, since the bits are changed at a boundary between the first image packet and the second image packet so that a clock edge is generated, the maximum run length can be satisfied.

The data group generation unit 524 may insert one indicator packet into N-1 image packets (N is a natural number) to generate a data group having N packets. According to the embodiment, one data group may have N packets, and each packet may have N bits. That is, one data group may have the same number of packets and bits. Therefore, effective clock recovery may be enabled in a receiver 200.

Referring to FIG. 6, the second encoder 415B may include a first bit generation unit 531 that generates a plurality of redundancy bits identical to a unit bit of an input control packet in units of unit bits, and a second bit generation unit 532 that generates an inverted bit of the unit bit. The first bit generation unit 531 may generate a plurality of pieces of redundancy data having the same value as a value of the unit bit.

For example, when the value of the unit bit is 1, the first bit generation unit 531 may generate three redundancy bits whose values are 1. For example, when the value of the unit bit is 0, the first bit generation unit 531 may generate three redundancy bits whose values are 0. A middle bit of the encoded redundancy bits may be a valid bit having information. However, the number of bits generated by the first bit generation unit 531 is not limited thereto. For example, the first bit generation unit 531 may generate two redundancy bits.

The second bit generation unit 532 may insert a unit bit and an inverted transition bit. For example, when a value of the unit bit is 1, the second bit generation unit 532 may generate a transition bit having a bit value of 0. For example, when the value of the unit bit is 0, the second bit generation unit 532 may generate a transition bit having a bit value of 1.

Therefore, when the bits of the control packet are [110] consisting of three unit bits, the bits encoded by the second encoder 415B may be [111011100001], and when the bits of the control packet are [1101], the encoded bits may be [110110001110]. When the data driving device 120 samples each bit for data and clock recovery, bit errors may occur, but according to the embodiment, a sampling margin may be secured by the redundancy bits, and thus bit errors can be reduced. Therefore, a component that detects an error, such as a cyclic redundancy check (CRC) or a checksum for checking an error, may be omitted.

The coding technique of the second encoder may be defined as transition code (TC) coding, but the embodiments of the present invention are not limited thereto, and the coding technique of the second encoder may be defined with another name.

Referring to FIG. 3 again, the second data conversion unit 412 may include a third packer 413C and a third encoder 415C. The third packer 413C may receive setting data from the data processing circuit 10 and generate a setting packet according to a predetermined number of bits. The setting packet may be referred to as a third data packet, a setting data packet, setting packet data, etc.

The setting data is data transmitted at a low speed and may include setting values of the data driving device 120 that are required before high-speed communication. For example, the setting data may include setting values of a circuit that performs high-speed communication in the data driving device 120.

The third encoder 415C may encode the setting packet packaged by the third packer 413C in a predetermined manner. The third encoder 415C may encode the setting packet with a direct current (DC) balance code. For example, the third encoder 415C may encode the setting packet with Manchester code or an 8B10B code, but the embodiments of the present invention are not limited thereto.

A first data output circuit 416 may receive data packets from each of the first encoder 415A, the second encoder 415B, and the third encoder 415C and transmit data suitable for a mode to a serializer 417. For example, the first data output circuit 416 may transmit setting data to the serializer 417 in a setting mode and transmit image data and control data to the serializer 417 in a display mode.

Data transmitted in parallel from the first data output circuit 416 may be converted serially by the serializer 417. The serializer 417 may transmit the serially converted transmission data to the data driving device 120. In this case, a series of data transmitted in series may form a transmission stream and may be in the form of a main communication signal MDT in terms of signal. The first data output circuit 416 and the serializer 417 may constitute a transmission unit. The transmission unit may be referred to as a transmission circuit, a transmission logic, etc.

According to the embodiment, even setting data transmitted at a low speed may be transmitted using a high-speed serializer 417. Therefore, a separate low-speed serializer may be omitted. In this case, the transmission data may vary so that the transmission data can be transmitted at a low speed even when the serializer 417 is driven at a high speed. For example, when bits [10] are transmitted, the number of bits is increased to bits [11111111110000000000] and transmitted so that the bits are transmitted at a high speed, but an actual data transmission rate may be adjusted so that the serializer 417 is driven at a low speed.

However, the embodiments of the present invention are not limited thereto. For example, the setting data transmitted from the first data output circuit 416 to the third encoder 415C may be synchronized with a high-speed frequency based on the second data rate or with a frequency of the image packet and transmitted to the serializer 417. The serializer 417 may serialize the received setting data and transmit the serialized setting data at the second data rate.

For example, it is assumed that the setting data output from the third encoder 415C is 12 bits, the output of the first data output circuit 416 has 12 bits, and the second data rate is 12 times faster than the first data rate. In this case, the first data output circuit 416 may transmit 1 clock output data of the third encoder 415C to the serializer 417 for 12 clocks as a high-speed packet clock. In this case, the data of 1 clock, which is a high-speed packet clock, is transmitted after 1 bit of the setting data output from the third encoder 415C is changed to 12 bits having the same value so that 1 bit may be output per clock. According to this configuration, high-speed transmission is possible in a transmitter without configuring a separate low-speed serializer, and the transmission rate on the first communication line CLM may be the second data rate.

For example, the setting data encoded by the second data conversion unit 412 may be transmitted to the main communication line CLM by a separately provided low-speed serializer.

The main communication line CLM may be composed of m lines (m is a natural number) that are electrically insulated. In addition, every two of the m lines may be paired, and each pair may enable LVDS communication. When the main communication line CLM includes two or more pairs, the serializer 417 may distribute and transmit the transmission data to each pair.

The transmission data is composed of bits, and multiple bits may constitute one symbol. One symbol may be composed of 6 bits, 8 bits, or 10 bits. In addition, a plurality of symbols may constitute one piece of image data. The image data may sequentially include information corresponding to sub-pixels such as red (R), green (G), and blue (B) pixels. The data driving device 120 may align data received serially in units of bits into units of bytes or units of pixels.

The main communication signal may be an embedded clock signal. Since the main communication signal has an embedded clock, the data driving device 120 may require clock training in an initial section of communication.

The data processing device 110 may include a first auxiliary communication circuit 420, and the first auxiliary communication circuit 420 may include a first auxiliary control circuit 421 and a first auxiliary signal processing circuit 422.

The first auxiliary signal processing circuit 422 may receive an auxiliary communication signal LCK from an auxiliary communication line CLA or transmit the auxiliary communication signal LCK to the auxiliary communication line CLA.

The first auxiliary control circuit 421 may check the auxiliary communication signal LCK received from the auxiliary communication line CLA, and when the auxiliary communication signal LCK indicates an abnormality in the data driving device 120, may transmit an auxiliary communication feedback signal of the same form as the auxiliary communication signal LCK to the auxiliary communication line CLA.

The data driving device 120 may include a second main communication circuit 610 and a second auxiliary communication circuit 620.

The second main communication circuit 610 may receive a main communication signal MDT through a main communication line CLM. The second main communication circuit 610 may receive image data and first control data through the main communication line CLM in an active section and receive second control data in a blank section. A data driving circuit 20 may drive pixels of a display panel according to the image data and the control data.

The second main communication circuit 610 may receive setting data at a first data rate through the main communication line CLM. In addition, the second main communication circuit 610 may receive the image data, the first control data, and the second control data at a second data rate higher than the first data rate through the main communication line CLM.

The second main communication circuit 610 may include a deserializer 617, a second data output circuit 616, a third data conversion unit 611, and a fourth data conversion unit 612. The deserializer 617 and the second data output circuit 616 may constitute a reception unit or a receiving circuit.

The deserializer 617 may parallelize the main communication signal MDT received serially through the main communication line CLM in units of bytes or in units of symbols.

The second data output circuit 616 may transmit parallel data converted by the deserializer 617 to the third data conversion unit 611 and the fourth data conversion unit 612 according to a mode. For example, in a setting mode, the setting data may be transmitted to a third decoder 615C, and in a display mode, the image data may be transmitted to a first decoder 615A or the control data may be transmitted to a second decoder 615B.

The third data conversion unit 611 may include the first decoder 615A, the second decoder 615B, a descrambler 614, a first unpacker 613A, and a second unpacker 613B.

The first decoder 615A may decode the image data, and the second decoder 615B may decode the control data. The first decoder 615A may perform decoding in the reverse order of the order in which the first encoder 415A encodes the image data. The second decoder 615B may perform decoding in the reverse order of the order in which the second encoder 415B encodes the control data. For example, the second decoder 615B may extract only a second bit out of every four bits from each control packet and delete the remaining bits. For example, when the bits of the control packet are [111011100001], only the second bit out of every four bits may be extracted and decoded as [110].

The descrambler 614 may restore scrambled data to the original data according to the pre-agreed rules. The descrambler 614 may restore the scrambled data by being synchronized with the scrambler 414.

The first unpacker 613A may align the image data in units of pixels and transmit the image data for each pixel to the data driving circuit 20. The second unpacker 613B may restore the control data to its original form and transmit the restored control data to the data driving circuit 20.

The fourth data conversion unit 612 may include the third decoder 615C and a third unpacker 613C. The third decoder 615C may restore the setting data encoded in Manchester code. The third unpacker 613C may receive the setting data and transmit setting values included in the setting data to the data driving circuit 20.

The second auxiliary communication circuit 620 may include a second auxiliary control circuit 621 and a second auxiliary signal processing circuit 622.

The second auxiliary control circuit 621 may check for an abnormal state of the main communication signal MDT, an abnormal state of the main communication circuit, and/or an abnormal state of another component, and generate a status signal.

The second auxiliary signal processing circuit 622 may generate the auxiliary communication signal LCK using a status signal or a feedback signal and transmit the auxiliary communication signal LCK to the auxiliary communication line CLA.

The data driving device 120 according to the embodiment may include a main control circuit 430. The main control circuit 430 may receive the control signal from the data processing circuit 10 and control the first data conversion unit 411, the second data conversion unit 412, the first data output circuit 416, etc. However, the embodiments of the present invention are not limited thereto. For example, as illustrated in FIG. 7, the data driving device 120 may be configured to perform a corresponding function by transmitting a signal to a block to be performed next according to logic when the role of each block is terminated without configuring a separate main control circuit. For an interface without a low-speed driving setting mode, the components of the second data conversion unit 412 in the data driving device 120 may be omitted.

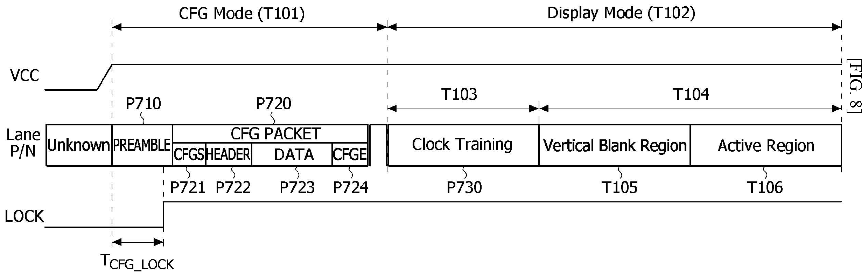

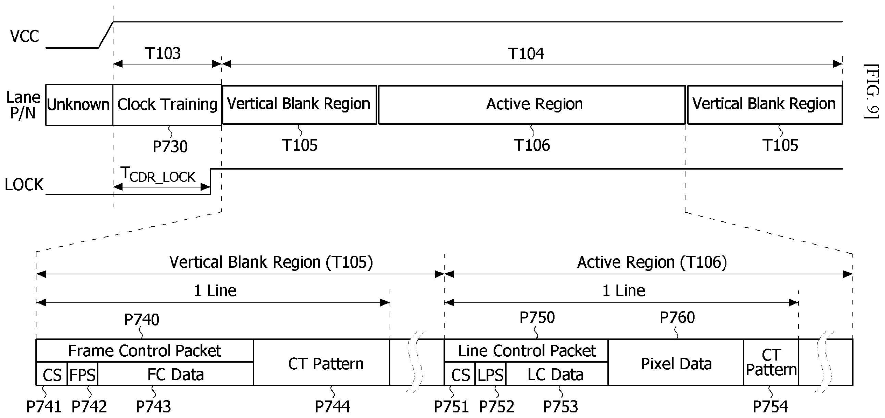

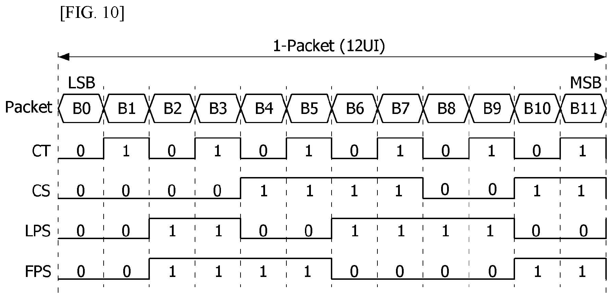

FIG. 8 is a diagram illustrating a sequence of transmission signals according to one embodiment. FIG. 9 is a configuration diagram of blank data and line data according to one embodiment of the present invention. FIG. 10 is a diagram illustrating bits of a plurality of packets according to one embodiment of the present invention.

Referring to FIGS. 8 to 10, a driving voltage VCC may initially be a low level voltage, but its waveform may be changed to that of a high level voltage at a certain time point. The time point at which the driving voltage VCC is changed to the high level voltage may be a driving time point of the display driving device 110.

After the driving time point, the data processing device 110 and the data driving device 120 may operate in a setting mode (CFG mode) T101. After the operation in the setting mode T101 is terminated, the data processing device 110 and the data driving device 120 may operate in a display mode T102.

In the setting mode T101, the data processing device 110 may consecutively transmit a preamble packet P710 and a setting packet P720 through the main communication signal MDT.

The data processing device 110 may change a voltage of the auxiliary communication feedback signal from a low level to a high level while transmitting the preamble packet P710. Through such a voltage change, the data processing device 110 may notify the data driving devices 120 that the preamble packet P710 is being transmitted.

The data driving device 120 may train a clock for low-speed communication for receiving the setting packet P720 using the preamble packet P710 composed of a clock training pattern. The data driving device 120 may perform phase locking on a preamble pattern within a T_{CFG_LOCK} time during which training is completed.

The data processing device 110 may transmit the preamble packet P710 and the setting packet P720 at a relatively low first data rate. The clock for low-speed communication becomes the first data rate, and the data driving device 120 may train the clock for low-speed communication using the preamble packet P710.

When the clock for low-speed communication is trained, the data driving device 120 may notify the data processing device 110 of the status of the clock training through the auxiliary communication signal. For example, when the clock for low-speed communication is trained, the data driving device 120 may change a voltage of the auxiliary communication signal from a low level to a high level. The data processing device 110 may transmit the setting packet P720 after checking that the data driving device 120 has trained the clock for low-speed communication through the auxiliary communication signal.

The setting packet P720 may include a start bit (CFGS) P721, a header P722, body data P723, and an end bit (CFGE) P724. The setting packet P720 may further include checksum data as necessary.

The header P722 may include parameter values such as a data type, a mode, a recipient identification number (identification (ID)), a data length, a recipient setting register address, etc. The body data P723 may include setting information transmitted or received through a message.

The start bit P721 and the end bit P724 may be composed of different data bits. For example, when the start bit P721 is a data bit corresponding to binary "0," the end bit P724 may be composed of a data bit corresponding to binary "1."

The data driving device 120 may recognize the end bit P724 through the first communication signal MDT, and then when the first communication signal MDT is maintained at a voltage level that can be recognized as a binary number "0" or "1," may determine that the setting mode T101 is terminated and enter the display mode T102. However, the embodiments of the present invention are not limited thereto. Even when the level is not a level that can be recognized as a binary number "0" or "1" but a high or low level, it may be determined that the setting mode is terminated.

After the setting mode T101 is terminated, the data processing device 110 and the data driving device 120 may enter the display mode T102. The display mode T102 may be composed of a clock training section T103 and a frame section T104. When the clock for high speed communication is trained in the clock training section T103, the frame section T104 appears repeatedly thereafter.

In the clock training section T103, the data processing device 110 may transmit a clock training pattern P730 to the data driving device 120 at the second data rate. The data driving device 120 may train a clock for high speed communication corresponding to the second data rate to the clock training pattern P730. Here, the second data rate may have a higher frequency than the first data rate.

When the data driving device 120 fails to train the clock for high speed communication in the clock training section T103, the data driving device 120 may transmit a clock training failure signal through the auxiliary communication signal. For example, the data driving device 120 may notify the data processing device 110 of a clock training failure by lowering the voltage of the auxiliary communication signal from a high level to a low level.

When the clock training for the clock for high speed communication fails, the data processing device 110 may additionally transmit the clock training pattern P730 or return to the setting mode T101.

When the clock training for the clock for high speed communication is completed, the data processing device 110 and the data driving device 120 may enter the frame section T104.

The frame section T104 may include an active section T106 and a blank section T105. The active section T106 may be a section in which the image data and the control data are transmitted in units of lines, and the blank section T105 may be a section in which the image data in units of lines is not transmitted. The blank section T105 may be divided into a horizontal blank section and a vertical blank section, and hereinafter, for convenience of description, the blank section T105 will be described as a vertical blank section.

In the blank section T105, the data processing device 110 may transmit a frame control packet P740 in units of lines. The frame control packet P740 may include a control start packet (CS) P741, a frame start packet (FPS) P742, and a frame data packet (FC data) P743.

The control start packet P741 may indicate the start of a control packet. The frame start packet P742 may indicate the start of transmission of frame data. Therefore, it is possible to distinguish whether data to be transmitted after the control start signal is frame data or line data.

Referring to FIG. 10, bits of the control start packet P741 may be [110011110000] in a direction from MSB to LSB, and bits of the frame start packet P742 may be [001111001100], but the embodiments of the present invention are not limited thereto, and various other patterns are possible. TC coding or scrambling may not be applied to the control start packet P741 and the frame start packet P742.

The frame data packet P743 may include setting values that can be changed in units of frames or can be changed at any time. A frame clock training pattern may include a pattern signal that may train the clock for high speed communication. According to the embodiment, the frame control packet P740 and the frame clock training pattern may not be scrambled. However, the embodiments of the present invention are not limited thereto. For example, the frame control packet P740 may not be scrambled, and the frame clock training pattern P744, which is blank data, may be scrambled to reduce EMI.

In the blank section T105, the data processing device 110 may enter the active section T106 after transmitting blank data packets for all the lines. According to the embodiment, the blank data may include information about dummy data included in the image data. For example, by adding a dummy control signal that can identify a dummy line, the data processing device 110 may distinguish whether the corresponding pixel data is valid pixel data or dummy data generated to satisfy 12 bits. That is, in the vertical blank, the frame control packet P740, the dummy control packet, and the clock training may be transmitted in combination.

In the active section T106, the data processing device 110 may transmit a line control packet P750, an image packet P760, and a line clock training pattern P754 for each line.

The line control packet P750 may be composed of a control start packet P751, a line start packet P752, and a line data packet P753. The control start packet P751 may indicate the start of the line control packet P750, and the line start packet P752 may indicate the start of transmission of the line data. For example, bits of the start packet may be [110011110000] and bits of the line start packet P752 may be [110000111100], but the embodiments of the present invention are not limited thereto, and various other patterns are possible. Scrambling may not be applied to the control start packet P751 and the line start packet P752.

The line data packet P753 may include setting values that can be changed in units of lines or can be changed at any time. For example, the line data packet P753 may include a polarity value indicating the polarity of each pixel, a value indicating whether the scrambler 414 is reset, and control information regarding whether the corresponding image data is valid data or dummy data.

The image packet P760 may include grayscale values of pixels arranged in one line. The line clock training pattern P754 may include a pattern signal that may train the clock for high speed communication.

In the active section T106, the data processing device 110 may enter the blank section T105 after transmitting the line control packet P750 for all the lines.

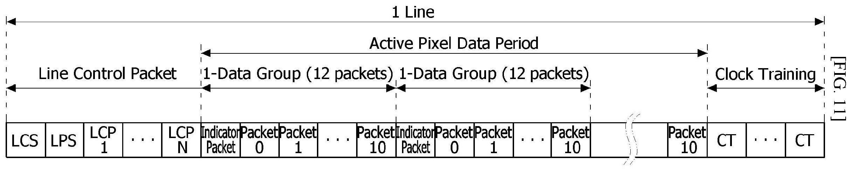

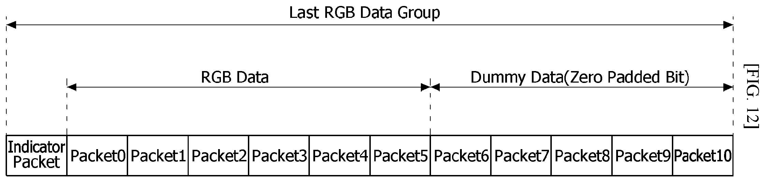

FIG. 11 is a configuration diagram of a data packet of a first horizontal line according to one embodiment of the present invention. FIG. 12 is a diagram illustrating a data packet including dummy data according to one embodiment of the present invention.

Referring to FIG. 11, the data packet of the first horizontal line may include a line control packet P750, a plurality of data groups including grayscale values of pixels arranged in one line, and a clock training pattern.

One data group may be composed of a total of N packets, including one indicator packet and N-1 image packets (Packet 1 to Packet N-1). In FIG. 11, an example in which one data group is composed of 12 packets is illustrated. The image packet may be defined as effective data serving as RGB image data, but the embodiments of the present invention are not limited thereto. As illustrated in FIG. 12, when RGB data is insufficient in the last data group of 1-Line, a packet may be generated by mapping a dummy bit. As described above, information about whether the image data of the corresponding line is effective image data or dummy data may be stored in the blank data or the line data.

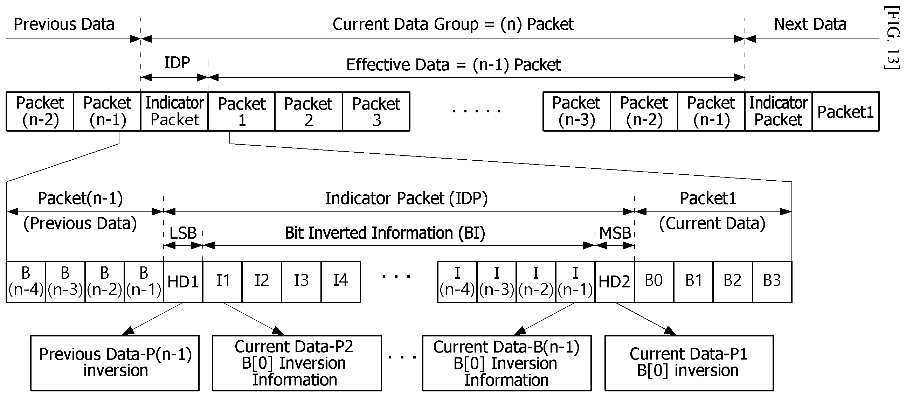

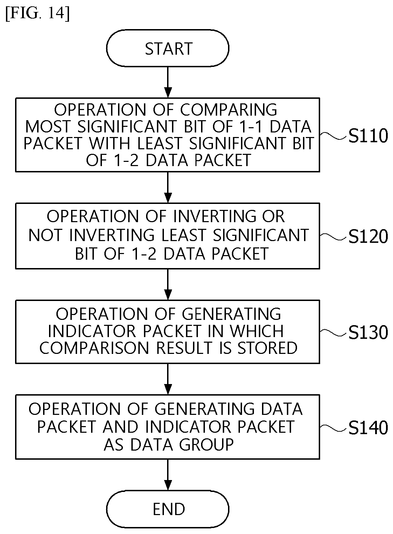

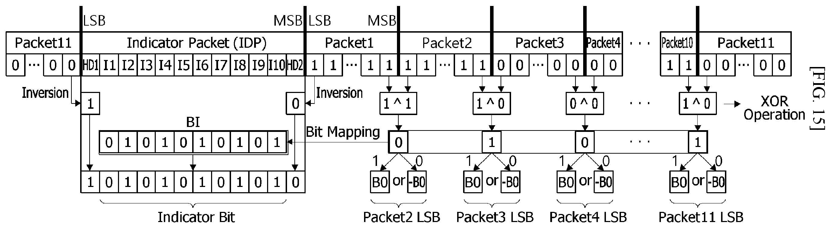

FIG. 13 is a diagram illustrating a structure of image data according to one embodiment of the present invention. FIG. 14 is a flowchart illustrating an operation of encoding image data according to one embodiment of the present invention. FIG. 15 is a diagram illustrating a method of encoding image data according to one embodiment of the present invention.

Referring to FIG. 13, an indicator packet IDP may have N bits (HD1, I1 to I(n-1), and HD2). An LSB and MSB of the indicator packet IDP may be clock bits (CK) or dummy bits. Conversion information BI of each image packet may be mapped between the LSB and MSB of the indicator packet IDP. In an embodiment, the LSB may be a bit closest to a previous packet within each packet, and the MSB may be a bit closest to a subsequent packet within each packet, but the embodiments of the present invention are not limited thereto.

The LSB of the indicator packet IDP may be mapped with a different value from an MSB B(n-1) of a previous image packet. For example, when a last bit B(n-1) of a previous data group is 0, the LSB of the indicator packet IDP may be written as 1. For example, when the last bit B(n-1) of the previous data group is 1, the LSB of the indicator packet IDP may be written as 0. Therefore, a clock edge may be generated at a boundary between the previous data group and a current data group.

The MSB of the indicator packet IDP may be matched by inverting a value of an LSB B0 of a first image packet Packet 1 in the current data group. For example, when an LSB B0 of the first image packet Packet 1 in the current data group is 1, the MSB of the indicator packet IDP may be mapped to 0. For example, when the LSB B0 of the first image packet Packet 1 in the current data group is 0, the MSB of the indicator packet IDP may be mapped to 1. Therefore, since a clock edge is generated at a boundary between the indicator packet IDP and the first video packet Packet 1 adjacent thereto, a maximum run length can be satisfied.

Referring to FIGS. 5, 14, and 15, in the comparison operation, an XOR operation may be performed on the MSB of the first image packet Packet 1 and the LSB of a second image packet Packet 2.

The data comparison unit 521 may output an inverted signal 0 when the MSB of the first image packet Packet 1 and the LSB of and the current image packet are both 0 or 1.

The data comparison unit 521 may output a non-inverted signal 1 when the MSB of the first image packet Packet 1 and the LSB of the second image packet Packet 2 have different bit values.

For example, when the MSB of the first image packet Packet 1 is 1 and the LSB of the second image packet Packet 2 is 1, the data comparison unit 521 may output an inverted signal 0 that inverts the LSB of the second image packet Packet 2 because the bit values are the same.

The code conversion unit 523 may invert the LSB of the second image packet Packet 2 and convert the LSB of the second image packet Packet 2 into 0 (~B0) because the inverted signal 0 is output. The bit generation unit 522 may map the conversion information 0 to an I1 position of the indicator packet IDP.

Thereafter, the data comparison unit 521 may compare the MSB of the second image packet Packet 2 with an LSB of a third image packet Packet 3 and output an inverted signal when the bit values are the same. For example, when the MSB of the second image packet Packet 2 is 1 and the LSB of the third image packet Packet 3 is 0, the bit values are different, and thus the data comparison unit 521 may output a non-inverted signal 1. The third image packet Packet 3 may be referred to as a 1-3 data packet.

The code conversion unit 523 may not invert the LSB of the third image packet Packet 3 according to the non-inverted signal 1 to maintain the LSB of the third image packet Packet 3 without change (B0). The bit generation unit 522 may map the conversion information 1 to an I2 position of the indicator packet IDP.

Similarly, the data comparison unit 521 may sequentially compare the MSB of the previous image packet with the LSB of and the current image packet to output an inverted signal or a non-inverted signal.

The code conversion unit 523 may invert or not invert the bit value of the LSB of the current image packet according to the inverted signal or the non-inverted signal. The bit generation unit 522 may sequentially map the conversion information BI to the corresponding bit position.

The LSB of the indicator packet IDP may be mapped to 1 by inverting the bit value 0 of the MSB of the previous image packet, and the MSB of the indicator packet IDP may be mapped to 0 by inverting the bit value 1 of the LSB of the first image packet Packet 1 of the current data group.

Conversion information BI of LSBs of the second to eleventh image packets (Packet 2 to Packet 11) may be sequentially mapped between the LSB and MSB of the indicator packet IDP.

According to the embodiment, since the MSB of the indicator packet IDP may be mapped with a different value from the LSB of the first image packet Packet 1, the LSB of the first image packet Packet 1 placed closest to the indicator packet IDP may not be encoded. In the data group, LSBs of the remaining 10 image packets excluding the first image packet Packet 1 may be inverted or maintained by an XOR operation.

For example, the data group may be composed of a total of 12 packets including 1 indicator packet and 11 image packets. The indicator packet and the image packets may each be composed of 12 bits. Therefore, the total number of bits in the data group may be 144. However, the specification of the present invention is not limited thereto. For example, the data group may be composed of 8 packets, including 1 indicator packet and 7 image packets. When each packet is composed of 8 bits, the total number of bits in the data group may be 64. According to the embodiment, since the number of packets and the number of bits in the packet are the same, a constant maximum run length can be maintained.

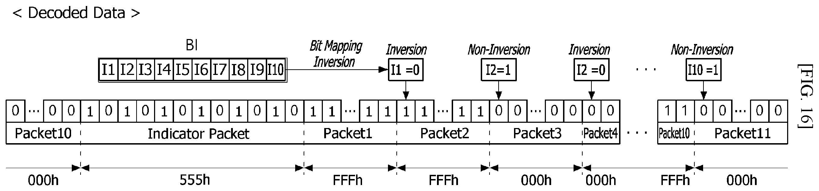

FIG. 16 is a diagram illustrating a decoding process according to one embodiment of the present invention.

Referring to FIG. 16, a decoder may separate an indicator packet from an image packet in a data group, and store each of the indicator packet and the image packet. The decoder may invert or not invert an LSB of the image packet according to conversion information BI of the indicator packet. The conversion information BI may be an indicator bit mapped to a bit position.

Since bit information at an I1 position in the conversion information BI is 0, the decoder may invert the LSB of the second image packet Packet 2 to 1.

Since bit information at an I2 position in the conversion information BI is 1, the decoder may maintain the LSB of the third image packet Packet 3 by not inverting the LSB of the third image packet Packet 3.

Since bit information at an I3 position in the conversion information BI is 0, the decoder may invert the LSB of the fourth image packet Packet 4 to 0.

Since bit information at an I10 position in the conversion information BI is 1, the decoder may maintain an LSB of the eleventh image packet Packet 11 by not inverting the LSB of the eleventh image packet Packet 11.

The restored data information may be restored identically to the original data. According to the embodiment, there is an advantage in that a separate memory for decoding is not required because decoding is performed using the conversion information stored in the indicator packet.

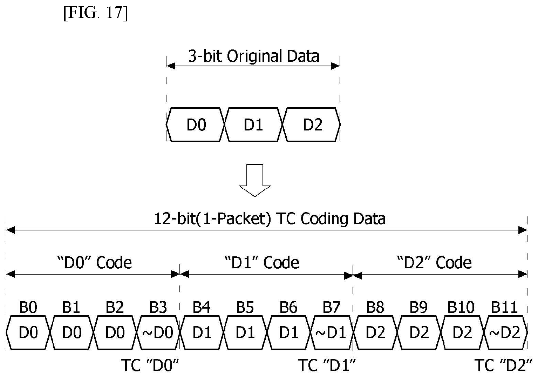

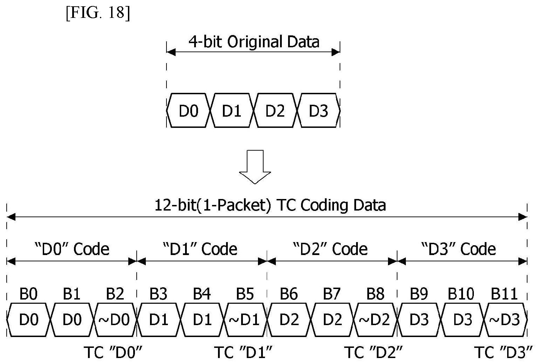

FIG. 17 is a diagram illustrating a process of encoding control data according to one embodiment of the present invention. FIG. 18 is a diagram illustrating a process of encoding control data according to another embodiment of the present invention.

Referring to FIG. 17, a control packet may be composed of three bits. A second encoder may map each bit of an input control packet to four bits. For example, when one control packet is composed of three unit bits, such as D0, D1, and D2, the second encoder may map the three bits identical to a first unit bit, D0, to redundancy bits B0, B1, and B2 and map a bit (~D0) inverted with D0 to a transition bit B3. Similarly, the second encoder may map a second unit bit, D1, and a third unit bit, D2, to three redundancy bits (B4, B5, and B6) or (B8, B9, and B10) and one inverted transition bit B7 or B11.

For example, when the bits of the control packet are [101], encoded bits may be [111000011110]. When packaged by a second packer, the number of bits of the control packet is less than the number of bits of the image packet, but after encoding, the number of bits per packet may be the same as 12. Therefore, the control packet composed of three bits may be mapped to 12 bits by the second encoder to satisfy a 12-bit format. Therefore, all data transmitted from the data driving device may satisfy the 12-bit format.

Among the three redundancy bits of the encoded bits, a middle bit B1, B5, or B9 may be a valid bit that has information. When each bit is sampled, bit errors may occur, but according to the embodiment, a sampling margin may be secured by the redundancy bits, and thus bit errors can be reduced. Therefore, a component that detects an error, such as a CRC or a checksum for checking an error, can be omitted.

Referring to FIG. 18, a control packet may be composed of four unit bits. A second encoder may map each bit of an input control packet to three bits. For example, when the control packet is composed of four bits in total, such as D0, D1, D2, and D3, the second encoder may map the two bits identical to a first unit bit, D0, to redundancy bits B0 and B1 and map one inverted bit to a transition bit B2. Similarly, the second encoder may map a second bit D1, a third bit D2, and a fourth bit D3 to two non-inverted redundancy bits and one inverted transition bit.

For example, when the bits of the control packet are [1010], the encoded bits may be [110001110001]. Therefore, the control packet composed of four bits may be mapped to 12 bits by the second encoder to satisfy a 12-bit format.

According to the embodiment, it is possible to support transmission of control data according to video timing, such as horizontal lines or vertical blanks.

According to the embodiment, two or more types of data coding techniques to which clock embedding is applied can be applied. Control data has an advantage of ensuring transmission signal quality, thereby allowing data checkers such as a CRC, a checksum, etc., to be omitted. Image data has an advantage of securing a regular run-length and easily embedding clocks.

According to the embodiment, the image data can be scrambled to reduce EMI.

Effects of the present invention are not limited to the above-described effects and other effects that are not described may be clearly understood by those skilled in the art from the description of the claims.

Since the content of the specification described above, including the objects to be solved, the solutions, and the effects, does not specify the essential features of the claims, the scope of the claims is not limited by the matters described in the contents of the specification.

Although embodiments have been described in more detail with reference to the accompanying drawings, the present invention is not necessarily limited to these embodiments, and various modifications may be made without departing from the technical idea of the present invention. Therefore, the embodiments disclosed in the present invention are not intended to limit the technical idea of the present invention but to explain it, and the scope of the technical idea of the present invention is not limited by these embodiments. Therefore, it should be understood that the embodiments described above are exemplary in all aspects and not restrictive.

## Claims

1. A data processing device comprising:
a first data conversion unit configured to convert image data and control data; and
a transmission unit configured to transmit the converted image data and control data,
wherein the first data conversion unit includes a first packer that converts the image data into a plurality of first data packets,
a second packer that converts the control data into a second data packet,
a first encoder that encodes the plurality of first data packets according to a first rule, and
a second encoder that encodes the second data packet according to a second rule different from the first rule.

2. The data processing device of claim 1, wherein a number of bits of the second data packet is smaller than a number of bits of the first data packet.

3. The data processing device of claim 2, wherein a number of bits of the encoded second data packet is the same as a number of bits of the encoded first data packet.

4. The data processing device of claim 1, wherein the control data includes first control data and second control data,
the first control data includes control values applied to a display panel in units of lines or in units of pixels, and
the second control data includes control values applied in units of frames.

5. The data processing device of claim 4, wherein the transmission unit divides each frame time into an active section and a blank section, transmits the image data and the first control data in the active section, and transmits the second control data in the blank section.

6. The data processing device of claim 1, further comprising a second data conversion unit including:
a third packer that converts setting data into a third data packet; and
a third encoder that encodes the third data packet according to a third rule different from the first and second rules.

7. The data processing device of claim 6, wherein the transmission unit transmits the converted image data, control data, and setting data in a predetermined order.

8. The data processing device of claim 1, wherein the first encoder includes:
a data comparison unit that compares a most significant bit (MSB) of a 1-1 data packet and a least significant bit (LSB) of a 1-2 data packet adjacent to the 1-1 data packet among the plurality of first data packets;
a code conversion unit that inverts the LSB of the 1-2 data packet when the MSB of the 1-1 data packet and the LSB of the 1-2 data packet have the same value; and
a bit generation unit that generates an indicator packet in which conversion information of the LSB of the 1-2 data packet is stored.

9. The data processing device of claim 8, further comprising a data group generation unit configured to insert the indicator packet into the plurality of first data packets to generate a plurality of data groups.

10. The data processing device of claim 9, wherein each of the plurality of data groups has the same number of packets, and
a number of bits of the indicator packet is the same as a number of data packets in the data group.

11. The data processing device of claim 1, wherein the second encoder maps each of unit bits constituting the control data to a plurality of redundancy bits having the same value as the unit bit and a transition bit having a different value from the unit bit.

12. A data driving device comprising:
a receiving circuit configured to receive a first data packet, a second data packet, and a third data packet;
a third data conversion unit configured to convert the first data packet and the second data packet; and
a fourth data conversion unit configured to convert the third data packet,
wherein the third data conversion unit includes a first decoder that decodes the first data packet according to a first rule,
a second decoder that decodes the second data packet according to a second rule different from the first rule,
a first unpacker that converts the first data packet into image data, and
a second unpacker that converts the second data packet into control data, and
the fourth data conversion unit includes a third decoder that decodes the third data packet according to a third rule different from the first and second rules, and
a third unpacker that converts the third data packet into setting data.
